# EUROPÄISCHE PATENTANMELDUNG

(11) **EP 2 540 914 A2**
(43) Veröffentlichungstag der Anmeldung: **02.01.2013**
(21) Anmeldenummer: 12002717.2
(22) Anmeldetag: 19.04.2012
(51) Int. Cl.: E02B 3/06, E02B 17/00

(54) **Verfahren zur Gründung mariner Bauwerke**

(30) Priorität: 28.06.2011 DE 102011106741
(71) Anmelder: RWE Innogy GmbH, 45127 Essen (DE)
(72) Erfinder: Hoppe, Anna, 30880 Laatzen (DE)
(74) Vertreter: Polypatent

(57) **Zusammenfassung**

Die Erfindung betrifft ein Verfahren zur Gründung von Offshore-Windenergieanlagen, bei welchem Gründungselemente in den Meeresboden gerammt werden. Das Verfahren umfasst neben dem Setzen der Gründungselemente mittels Rammen das Definieren einer Vergrämungszone für maritime Säugetiere im Umkreis der Gründung, das Erfassen von maritimen Säugetieren innerhalb der Vergrämungszone sowie das Durchführen von Vergrämungsmaßnahmen innerhalb der Vergrämungszone. Das Einleiten von Gründungsarbeiten erfolgt erst, wenn keine Säugetiere in der Vergrämungszone erfassbar sind.

## Beschreibung

Die Erfindung betrifft ein Verfahren zur Gründung mariner Bauwerke, insbesondere ein Verfahren zur Gründung von Offshore-Windenergieanlagen, bei welchem zumindest zeitweise durch Setzen von Gründungselementen Schallenergie in den Wasserkörper eingetragen wird.

Es ist grundsätzlich bekannt, als Gründung für Offshore-Windenergieanlagen in den Boden eingerammte Monopiles, mit Pfählen verankerte Tripods oder Jacketfundamente als auch Schwerkraftfundamente einzusetzen. Schwerkraftfundamente haben den Vorzug, ohne große Geräuschentwicklung auf dem Meeresboden abgesetzt werden zu können. Bekanntermaßen breiten sich Schallwellen im Wasser besonders gut aus, so dass durch die in den Wasserkörper eingetragene Schallenergie unter Umständen marine Säugetiere wie beispielsweise Schweinswale und Robben, Seehunde etc. durch die Geräuschquellen beeinträchtigt werden.

Ein Nachteil der zuvor erwähnten Schwerkraftfundamente ist der hohe Kostenaufwand für die Gründung.

Weit verbreitet ist daher die Rammung von Fundamentpfählen, was zu einer enormen Hydroschallentwicklung führt. Die durch die Rammung induzierte Schallenergie, die in den Wasserkörper eingetragen wird, kann eine Beeinträchtigung der schallempfindlichen Säugetiere, insbesondere der Schweinswale nach sich ziehen. Diese werden unter Umständen hörgeschädigt und damit orientierungslos.

Aus dem Stand der Technik sind zu diesem Zwecke diverse Maßnahmen zur Reduzierung der Übertragung und Ausbreitung von Schall unter Wasser bekannt.

Aus der DE 10 2008 017 418 ist zum Beispiel eine Vorrichtung zur Reduzierung der Übertragung und Ausbreitung von Schall in Wasser durch Schalldämpfung mittels mehrerer jeweils gaseinschließender und zueinander beabstandeter Hüllkörper bekannt, die ein Trägerelement und einen Massenkörper aufweist und vom Wasser durchströmbar ist, wobei die Hüllkörper zueinander beabstandet an dem Trägerelement angeordnet sind und jeder Hüllkörper mit Gas individuell mit einem Druck so befüllt ist, dass jeder Hüllkörper Dämpfungseigenschaften besitzt, die abhängig von den Anforderungen wie Position, Wassertiefe und Schallfrequenz dimensioniert worden sind.

Schließlich ist es aus dem Stand der Technik auch bekannt, Schallausbreitung im Wasser mit dem Prinzip einer schalldämmenden und absorbierenden Luftschicht zu reduzieren. Eine solche Luftschicht kann etwa durch Schläuche, Luftpolster, Schaumschichten oder lufthaltige Folien realisiert werden. In diesem Fall muss eine vollständige Umhüllung der Schallquelle vorgenommen werden, um die erhoffte Wirkung der Schalldämpfung zu erreichen.

Weder beim Einsatz von sogenannten Hydroschalldämpfern noch beim Einsatz von Blasenschleiern, die nach dem zuvor beschriebenen Prinzip arbeiten, ist sichergestellt, dass in 750 m Entfernung von der Geräuschquelle ein Wert von 160 dB Schalldruckpegel eingehalten wird. Mit solchen Maßnahmen kann ein Wert von 160 dB Schalldruckpegel voraussichtlich erst in einem Abstand von etwa 1,7 km von der Geräuschquelle unterschritten werden. Bei einem Schalldruckpegel von über 160 dB besteht bei vielen Säugetieren das Risiko einer zeitweiligen oder permanenten Verschiebung der Hörschwelle.

Abgesehen von der teilweise recht zweifelhaften Effektivität der bekannten Schallschutzkonzepte sind diese auch verhältnismäßig aufwendig. Beispielsweise für die Erzeugung eines Blasenschleiers zur Dämpfung von Schallemission müssen große Mengen komprimierten Gases verdichtet und befördert werden. Die dazu notwendigen Anlagen weisen einen hohen Energiebedarf und hohe Betriebskosten auf, die mit zunehmender Wassertiefe steigen.

Der Erfindung liegt daher die Aufgabe zugrunde, ein Verfahren zur Gründung mariner Bauwerke insbesondere zur Gründung von Offshore-Windenergieanlagen bereitzustellen, welches besonders kostengünstig und einfach im Hinblick auf den gewünschten Schallschutz durchführbar ist.

Die Aufgabe wird gelöst durch ein Verfahren zur Gründung mariner Bauwerke, insbesondere durch ein Verfahren zur Gründung von Offshore-Windenergieanlagen, bei welchem zumindest zeitweise durch Setzen von Gründungselementen Schallenergie in den Wasserkörper eingetragen wird, wobei das Verfahren folgende Schritte umfasst:
- Definieren einer Vergrämungszone für maritime Säugetiere im Umkreis der Gründung, wobei der Radius der Vergrämungszone in Abhängigkeit des erzeugten Schalldruckpegels festgelegt wird,
- Erfassen von marinen Säugetieren innerhalb der Vergrämungszone,
- Durchführen von Vergrämungsmaßnahmen innerhalb der Vergrämungszone und
- Einleiten von Gründungsarbeiten, wenn keine Säugetiere in der Vergrämungszone erfassbar sind.

Die Erfindung geht grundsätzlich einen anderen Weg als der Stand der Technik. Die Erfindung geht von der Annahme aus, dass es unwahrscheinlich ist, dass sich maritime Säugetiere, insbesondere Schweinswale, in einem Gebiet mit intensiven Geräuschemissionen aufhalten.

Mit dem erfindungsgemäßen Verfahren wird zunächst einmal sichergestellt, dass sich beispielsweise Schweinswale, die sich im Bereich einer Rammstelle befinden, zeitnah geortet und anschließend vergrämt werden, so dass im Sinne des Tierschutzes eine Verletzung oder Tötung der Tiere grundsätzlich verhindert werden kann. Es wird daher grundsätzlich sichergestellt, dass sich keine Meeressäuger in der Nähe der Emissionsquelle aufhalten, so dass Verletzungen und plötzliche Fluchtreaktionen, die sich als Störungen auswirken könnten, vermieden werden. Dies wird durch Detektion von Meeressäugern und Vergrämungsmaßnahmen erreicht.

Erfindungsgemäß ist vorgesehen, dass die Durchführung von Vergrämungsmaßnahmen über einen vorgegebenen Zeitraum unabhängig von der Erfassung von Säugetieren erfolgt.

Zunächst erfolgt erfindungsgemäß das Absuchen der Vergrämungszone, beispielsweise für einen Zeitraum von 30 Minuten. Erfolgt keine Erkennung von Säugetieren innerhalb der Vergrämungszone, werden Vergrämungsmaßnahmen über einen vorgegebenen Zeitraum durchgeführt, sodann werden die Gründungsarbeiten aufgenommen.

Werden die Gründungsarbeiten über eine vorbestimmte Zeitspanne unterbrochen, so ist erfindungsgemäß vorgesehen, dass eine erneute Erfassung von Säugetieren und gegebenenfalls Durchführung von Vergrämungsmaßnahmen erfolgt.

Zweckmäßigerweise wird der Radius der Vergrämungszone so gewählt, dass der innerhalb der Vergrämungszone erfassbare Schalldruckpegel ≤ 160 dB beträgt.

Die Erfassung der Säugetiere kann beispielsweise akustisch erfolgen. Alternativ oder zusätzlich kann eine visuelle Erfassung der Säugetiere vorgesehen sein.

Beispielsweise kann die Erfassung von Säugetieren mittels Hydrophonen und/oder Sonar, beispielsweise mittels Multibeam-Sonar, erfolgen.

Das Verfahren gemäß der Erfindung kann das Aussetzen von Bojen mit Detektionseinrichtungen in der Vergrämungszone umfassen.

Die Vergrämung erfolgt zweckmäßigerweise akustisch, beispielsweise mittels Pinger und/oder Seal Scarer. Dies sind Geräte, die sich zur Vergrämung von Tieren bereits bewährt haben. Pinger sind beispielsweise akustische Signalgeber, die in der Fischerei dazu eingesetzt werden, um Schweinswale und andere Kleinwale von den Netzen fernzuhalten. Diese akustischen Vergrämer leiten ebenfalls Geräusche in den Wasserkörper ein, die allerdings lediglich Scheuchwirkung entfalten und keinerlei schädliche Auswirkung auf das Gehörsystem der Säugetiere besitzen.

Bei dem Verfahren gemäß der Erfindung ist vorgesehen, dass die Gründungsarbeiten das Rammen von Gründungselementen, beispielsweise Gründungspfählen, umfassen. Das Rammen kann erfindungsgemäß mit wenigstens zwei Intensitätsstufen durchgeführt werden.

Bei einer besonders bevorzugten Variante des Verfahrens ist vorgesehen, dass nach der Durchführung von Vergrämungsmaßnahmen zunächst über einen vorbestimmten Zeitraum mit einer ersten niedrigen Intensität gerammt wird und danach eine erneute Erfassung und/oder erneute Vergrämung von Säugetieren erfolgt.

Das der Erfindung zugrundeliegende Problem wird weiterhin gelöst durch ein System zum Schutz mariner Säugetiere während der Gründung von Offshore-Windanlagen, umfassend Detektionseinrichtungen zur akustischen und/oder visuellen Erfassung von marinen Säugetieren, die innerhalb einer definierten Vergrämungszone im Wasser abgesetzt angeordnet sind, Mittel zur Übertragung und Auswertung von Erfassungsdaten, vorzugsweise in Echtzeit sowie Mittel zur Durchführung von Vergrämungsmaßnahmen. Das erfindungsgemäß vorgesehene System erlaubt die Kontrolle, ob marine Säugetiere, insbesondere Schweinswale, anwesend sind, und zwar unmittelbar vor den Rammarbeiten bzw. während der Rammarbeiten. Durch eine akustische und/oder visuelle Echtzeiterfassung mariner Säugetiere innerhalb einer definierten Vergrämungszone kann aufgrund vorliegender positiver Erfassungsdaten jederzeit eine Gründung bzw. die Durchführung von Rammarbeiten unterbrochen werden.

Eine bevorzugte Variante des Systems gemäß der Erfindung umfasst vorzugsweise mehrere Bojen mit jeweils daran angeordneten Detektionseinrichtungen, welche systematisch innerhalb der Vergrämungszone so angeordnet werden können, sodass eine etwa flächendeckende Erfassung von marinen Säugetieren innerhalb der Vergrämungszone möglich ist.

Das System erfasst zweckmäßigerweise wenigstens eine Boje mit einer akustischen Vergrämungseinrichtung. Grundsätzlich können Bojen sowohl mit akustischen Vergrämungseinrichtungen als auch mit Detektionseinrichtungen ausgestattet sein.

Vorzugsweise umfasst das System wenigstens einen Datenspeicher und/oder eine Einrichtung zur Datenfernübertragung an wenigstens einer Detektionseinrichtung.

Ein besonders vorteilhaftes System gemäß der Erfindung umfasst Mittel zur Positionsdatenerfassung an wenigstens einer Detektionseinrichtung. Als Mittel zur Positionsdatenerfassung kommen beispielsweise GPS-Empfänger in Betracht, die über ein Mobilfunknetz/GSM-Netz die Positionsdaten zusammen mit den Detektionsdaten an die Auswerteeinheit übertragen.

Erfolgt nach einer erneuten Erfassung von Säugetieren keine akustische und/oder optische Detektion, kann dann mit voller Leistung gerammt werden.

Das Verfahren zur Gründung des Bauwerks unter Rammung von Fundamentpfählen läuft beispielsweise folgendermaßen ab:

Bevor die Installation mit einem Rammen mit einer ersten niedrigen Intensitätsstufe (Softstart-Rammen) beginnt, wird für 30 bis 60 Minuten vor Beginn der Rammarbeiten eine vordefinierte Vergrämungszone beispielsweise nach Schweinswalen abgesucht. Die Vergrämungszone kann beispielsweise einen Umkreis mit einem Radius von 1,7 km von der Rammstelle aufweisen. Zum Absuchen der Vergrämungszone kommen neben einer visuellen Beobachtung vor allen Dingen akustische Geräte zum Einsatz. Hierzu werden Hydrophone verwendet, die Signale aus ihrer Umgebung aufnehmen und über geeignete Übertragungstechnik direkt Aufschluss darüber geben, ob sich marine Säugetiere in der Umgebung befinden. Die Hydrophone werden an mehreren Bojen angebracht und in der Vergrämungszone abgesetzt. Eine direkte Datenübertragung von den Hydrophonen auf eine Empfangsstation kann drahtlos erfolgen. Abhängig von der Reichweite der einzusetzenden Hydrophone wird eine Vielzahl von Bojen in der Vergrämungszone ausgesetzt, um eine größtmögliche Abdeckung des rammnahen Gebietes zu erzielen. Zusätzlich oder alternativ wird ein sogenanntes Multibeam Sonar eingesetzt, dass eine horizontale sowie vertikale Erfassung der Umgebung in der Vergrämungszone ermöglicht. Solche Sonargeräte arbeiten in einem verhältnismäßig hohen Frequenzbereich, der über dem Hörbereich von Schweinswalen liegt, wodurch Verhaltensreaktionen von Schweinswalen auszuschließen sind. Die Datenübertragung aus der Erfassung kann beispielsweise sogenannter PODs erfolgen. Diese POD-Kontrolleinheiten umfassen einen GSM-Sender sowie eine GPS-Einheit und lassen sich an beliebige Sensoren anschließen. Die Daten werden erfindungsgemäß über ein GSM-Netz (Mobilfunknetz) in Echtzeit an ein entfernt angeordnete Datenauswertezentrale übertragen. Eine solche Datenauswertezentrale kann beispielsweise auf einem Schiff oder einer Plattform vorgesehen sein, von welchem Gründungsmaßnahmen durchgeführt werden.

Nach dem Absuchen der Vergrämungszone über den vorgegebenen Zeitraum von 30 bis 60 Minuten erfolgt dann die Einleitung von Vergrämungsmaßnahmen beispielsweise mittels Pinger und Seal Scarer. Pinger sind Geräte, die akustische Signale im mittleren bis hohen Frequenzbereich von 2,5 bis 100 kHz mit einem relativ niedrigen Schalldruckpegel von < 150 dB in die Meeresumwelt abgeben. Seal Scarer senden akustische Signale im mittleren bis hohen Frequenzbereich von 5 bis 30 kHz mit einem relativ hohen Schalldruckpegel von > 185 dB aus. Der Schalldruckpegel des Pingers reicht aus, Schweinswale aus dem Gebiet zu vergrämen, der Seal Scarer soll sämtliche Säugetiere weitläufig aus dem Gebiet fernhalten. Der Pinger wird 20 Minuten vor Beginn der Rammarbeiten und der Sael Scarer 10 Minuten nach dem Pinger aktiviert. Sobald das Rammen beginnt, werden die beiden Geräte deaktiviert. Zunächst erfolgt das Rammen dann mit einer niedrigeren Intensitätsstufe über einen Zeitraum von 20 Minuten. Danach folgt eine weitere akustische und/oder optische Detektion von Meeressäugern. Bei Detektion von Meeressäugern wird das Rammen eingestellt, es wird abgewartet, bis die Säuger die Vergrämungszone verlassen. Nach weiteren 20 Minuten werden erneut akustische Vergrämungsmaßnahmen eingeleitet. Erfolgt nach Durchführung der Vergrämungsmaßnahmen keine akustische und/oder optische Erkennung von maritimen Säugern, werden die Rammarbeiten wieder aufgenommen, und zwar zunächst wieder mit der ersten niedrigeren Intensitätsstufe. Erfolgt danach oder währenddessen keine akustische und/oder optische Detektion von Meeressäugern, wird das Rammen mit voller Leistung durchgeführt.

Werden die Rammarbeiten für einen Zeitraum von mehr als 20 Minuten unterbrochen, erfolgt zunächst eine erneute Erfassung mariner Säugetiere sowie das anschließende Einleiten von Vergrämungsmaßnahmen.

## Patentansprüche

1. Verfahren zur Gründung maritimer Bauwerke, insbesondere Verfahren zur Gründung von Offshore-Windenergieanlagen, bei welchem zumindest zeitweise durch Setzen von Gründungselementen Schallenergie in den Wasserkörper eingetragen wird, wobei das Verfahren folgende Schritte umfasst:
- Definieren einer Vergrämungszone für maritime Säugetiere im Umkreis der Gründung, wobei der Radius der Vergrämungszone in Abhängigkeit des erzeugten Schalldruckpegels festgelegt wird,
- Erfassen von maritimen Säugetieren innerhalb der Vergrämungszone,
- Durchführen von Vergrämungsmaßnahmen innerhalb der Vergrämungszone und
- Einleiten von Gründungsarbeiten, wenn keine Säugetiere in der Vergrämungszone erfassbar sind.

2. Verfahren nach Anspruch 1, **dadurch gekennzeichnet, dass** die Durchführung von Vergrämungsmaßnahmen über einen vorgegebenen Zeitraum unabhängig von der Erfassung von Säugetieren erfolgt.

3. Verfahren nach Anspruch 1 oder 2, **dadurch gekennzeichnet, dass** eine erneute Erfassung von Säugetieren und gegebenenfalls Durchführung von Vergrämungsmaßnahmen erfolgt, wenn die Gründungsarbeiten über eine vorbestimmte Zeitspanne unterbrochen werden.

4. Verfahren nach einem der Ansprüche 1 bis 3, **dadurch gekennzeichnet, dass** der Radius der Vergrämungszone so gewählt wird, dass der innerhalb der Vergrämungszone erfassbare Schalldruckpegel ≤ 160 dB beträgt.

5. Verfahren nach einem der Ansprüche 1 bis 4, **dadurch gekennzeichnet, dass** die Erfassung der Säugetiere akustisch und/oder visuell erfolgt.

6. Verfahren nach einem der Ansprüche 1 bis 5, **dadurch gekennzeichnet, dass** die Erfassung der Säugetiere mittels Hydrophonen und/oder Sonar erfolgt.

7. Verfahren nach einem der Ansprüche 1 bis 6, umfassend das Aussetzen von Bojen mit Detektionseinrichtungen in der Vergrämungszone.

8. Verfahren nach einem der Ansprüche 1 bis 7, **dadurch gekennzeichnet, dass** die Vergrämung akustisch erfolgt.

9. Verfahren nach einem der Ansprüche 1 bis 8, **dadurch gekennzeichnet, dass** die Vergrämung mittels Pinger und/oder Seal Scarer erfolgt.

10. Verfahren nach einem der Ansprüche 1 bis 9, **dadurch gekennzeichnet, dass** die Gründungsarbeiten das Rammen von Gründungselementen umfassen.

11. Verfahren nach Anspruch 10, **dadurch gekennzeichnet, dass** das Rammen mit wenigstens zwei Intensitätsstufen durchgeführt wird.

12. Verfahren nach einem der Ansprüche 1 bis 11, **dadurch gekennzeichnet, dass** nach dem Durchführen von Vergrämungsmaßnahmen zunächst über einen vorbestimmten Zeitraum mit einer ersten niedrigen Intensität gerammt wird und danach eine erneute Erfassung und/oder gegebenenfalls erneute Vergrämung von Säugetieren erfolgt.

13. System zum Schutz mariner Säugetiere während der Gründung von Offshore-Windanlagen umfassend wenigstens eine Detektionseinrichtung zur akustischen und/oder visuellen Erfassung von marinen Säugetieren, die innerhalb einer definierten Vergrämungszone im Wasser abgesetzt und angeordnet ist, Mittel zur Übertragung und Auswertung von Erfassungsdaten, vorzugsweise in Echtzeit sowie Mittel zur Durchführung von Vergrämungsmaßnahmen.

14. System nach Anspruch 13, umfassend wenigstens eine, vorzugsweise mehrere Bojen mit jeweils darin angeordneten Detektionseinrichtungen.

15. System nach einem der Ansprüche 13 oder 14, umfassend wenigstens eine Boje mit einer akustischen Vergrämungseinrichtung.

16. System nach einem der Ansprüche 1 bis 15, **gekennzeichnet durch** wenigstens einen Datenspeicher und eine Einrichtung zur Datenfernübertragung an wenigstens einer Detektionseinrichtung.
